# FASCICULE DE BREVET EUROPEEN

(11) **EP 0 626 347 B1**
(45) Date de publication et mention de la délivrance du brevet: **05.03.2003**
(21) Numéro de dépôt: 94401097.4
(22) Date de dépôt: 18.05.1994
(51) Int. Cl.: C02F 1/52

(54) **Utilisation des halogenures comme stabilisateurs de melanges à base de polychlorure d'aluminium et de sel de fer .**
Verwendung von Halogenuren als Stabilisatoren von Mischungen aus Polyaluminiumchlorid und Eisensalz.
Use of halogenides as stabilisators for mixtures of polyaluminium chloride and iron salt.

(30) Priorité: 24.05.1993 FR 9306159
(43) Date de publication de la demande: 30.11.1994
(73) Titulaire: KEMRHONE FRANCE, F-92400 Courbevoie (FR)
(72) Inventeur: Danda, Sylvain, F-95670 Marly la Ville (FR); Kvant, Magnus, F-67470 Niederroedern (FR); Pescher, Yvette, F-92220 Bagneux (FR)
(74) Mandataire: Dubruc, Philippe

(56) Documents cités:
- EP-A- 0 261 019
- US-A- 4 362 643
- PATENT ABSTRACTS OF JAPAN vol. 7, no. 28 (C-149) (1173) 4 Février 1983 & JP-A-57 184 489 (ASAHI GLASS K. K.) 13 Novembre 1982
- DATABASE WPI Week 8732, Derwent Publications Ltd., London, GB; AN 87-224712 'STORAGE-STABLE LIQ. FLOCCULANT' & JP-A-62 149 311 (MIZUSAWA KAGAKU KOG)

## Description

La présente invention a trait à l'utilisation comme agent stabilisant, dans un mélange d'au moins un polychlorure basique d'aluminium, au moins un composé à base de fer (II) et/ou fer (III), présentant un rapport Al/Fe entre 1 et 50% (poids métal) d'au moins un sel choisi parmi les halogénures de métal alcalin et/ou alcalino-terreux.

On sait que les principales méthodes de traitement des eaux (eaux de surface, effluents, eaux résiduaires, eaux usées, etc.) mettent en oeuvre essentiellement une étape d'élimination des matières en suspension, par décantation gravitaire (sédimentation), les eaux clarifiées surnageantes, récupérées, étant subissant ensuite une étape de filtration.

Afin d'améliorer les conditions de sédimentation, et donc la qualité des eaux traitées, il est connu depuis longtemps d'utiliser des agents coagulants, comme notamment les chlorures, sulfates, les chlorosulfates de fer (II), de fer (III) ou encore d'aluminium.

Même si chacun de ces agents est efficace, la mise en oeuvre de ces derniers, ne permettait pas de résoudre certains problèmes, dus principalement à une réglementation de plus en plus stricte quant à la qualité des eaux traitées. Ainsi, les composés à base de fer, principalement des composés du fer ferrique, présentent une meilleure capacité à insolubiliser les sulfures mais ont l'inconvénient de donner à l'eau traitée une coloration. Par contre, l'utilisation de coagulants à base d'aluminium ne donne pas à l'eau de coloration particulière mais ne permet pas d'éliminer totalement les sulfures.

Une amélioration des procédés de traitement des eaux mettant en oeuvre les méthodes de floculation/décantation, a consisté à utiliser ces deux types d'agents coagulants dans le même procédé. Cependant, la mise en oeuvre de ces méthodes s'est avérée complexe sur le plan de la mise en oeuvre. En effet, outre la multiplication des sources d'agents coagulants, il est nécessaire de respecter un délai particulier entre l'introduction de chacun desdits agents coagulants afin de constater l'effet de synergie dû à leur utilisation conjointe.

Il est par ailleurs connu d'utiliser des solutions comprenant les deux agents coagulants. Cependant, on a constaté que de tels mélanges n'étaient pas stables et qu'un précipité ou un gel apparaissait au bout de quelques heures seulement, voire quelques jours au maximum.

De ce fait, l'opération de pompage de ces mélanges, pendant le traitement des eaux, est compliquée et le dosage correct des agents coagulants dans le milieu, difficile à atteindre ou contrôler. Par conséquent, afin de ne pas rencontrer ces difficultés, il est nécessaire de préparer les solutions peu de temps avant l'utilisation de celles-ci. Ceci représente bien entendu un inconvénient important.

La présente invention a donc pour objet de remédier aux défauts mentionnés ci-dessus.

Ainsi, un premier objet de l'invention est constitué par l'utilisation définie dans la revendication 1.

Il a été en effet trouvé de façon totalement inattendue que l'addition d'un sel du type des halogénures de métal alcalin et/ou alcalino-terreux permettait de stabiliser efficacement le mélange à base des deux coagulants mentionnés ci-dessus. En effet, on n'a pas constaté l'apparition de précipité après un stockage de plusieurs mois.

Par conséquent, le procédé de traitement de milieux aqueux est considérablement simplifié par rapport aux procédés connus mettant en oeuvre les deux types d'agents coagulants entrant dans la composition du mélange selon l'invention.

Effectivement, il n'est plus nécessaire de multiplier les mélanges comprenant chacuns les agents de coagulation requis, que ce soit durant l'utilisation, dans le cas des procédés employant successivement les deux composés, ou au stockage, dans le cas de traitement mettant en oeuvre le mélange des deux composés, mélange préparé peu de temps avant son utilisation.

La présente invention a donc pour objet l'utilisation comme agent stabilisant d'une composition comprenant au moins un polychlorure d'aluminium basique, au moins un composé de fer(II) et/ou de fer (III) d'un sel choisi parmi les halogénures de métal alcalin et/ou alcalino-terreux.

Enfin, la présente invention concerne un procédé de traitement de milieux aqueux mettant en oeuvre la composition précitée.

La présente invention et les avantages qu'elle procure seront mieux compris à la lecture de la description et des exemples non limitatifs qui vont suivre.

La composition obtenue par l'utilisation selon l'invention est avantageusement une solution, stable et pompable.

Plus particulièrement, le solvant utilisée pour ladite composition est l'eau.

Par polychlorure d'aluminium basique, on entend les composés correspondant à la formule générale suivante :

- [Alₙ(OH)ₘCl₃ₙ₋ₘ][H₂O]_{z} (I)

Formule dans laquelle :
n, m, k sont des nombres positifs,
3n-m est positif,
z est un entier positif au moins égal à 1.

Pour des raisons de simplification, le terme polychlorure d'aluminium sera utilisé, dans la suite de la description, pour désigner à la fois les polychlorures basiques et les polychlorosulfates basiques d'aluminium.

La basicité du composé à base d'aluminium, correspondant au rapport (exprimé en %) du nombre de groupement (OH) divisé par 3 fois le nombre d'atome d'aluminium, soit (m/3n)x100, est comprise entre 10 et 80%.

De préférence, la basicité de ce composé est comprise entre 20 et 80 %.

Selon un mode de réalisation particulier de la présente invention, le polychlorure d'aluminium comprend une teneur en aluminium, exprimée en Al₂O₃, inférieure à 22 %. De préférence cette teneur est comprise entre 5 et 22 %. Selon un mode plus préféré, ladite teneur est comprise entre 10 et 22%.

Il est à noter que les polychlorures d'aluminium sont des composés bien connus de l'homme du métier de même que leur mode de synthèse. En effet, ces composés ont fait l'objet de brevets, comme par exemple US 3 929 666, FR 2 534 897, FR 2 584 699.

Ainsi que cela a été mentionné auparavant, la solution selon l'invention comprend en outre au moins un composé à base de fer (II) et/ou de fer (III).

Les composés utilisés classiquement en tant que coagulants à base de cet élément conviennent à la mise en oeuvre de la présente invention. Ainsi, à titre d'exemples, on peut citer les chlorures, sulfates de fer ferreux ou ferriques. Les composés à base de fer sont de préférence choisis parmi les chlorures de fer (II) et/ou (III) ou les chlorosulfates de fer ferrique..

Selon un mode particulier de réalisation de l'invention, la composition selon l'invention comprend un composé à base de fer (III).

La proportion de polychlorure d'aluminium et du composé à base de fer dans la composition est telle que le rapport aluminium/fer est compris entre 1 et 50 % (exprimé en poids des éléments sous forme de métal).

Plus particulièrement, ledit rapport est compris entre 10 et 30 %, de préférence entre 10 et 20 %.

L'utilisation selon l'invention comprend en outre au moins un sel choisi parmi les halogénures de métal alcalin et/ou alcalino-terreux.

Les sels convenant à l'invention sont choisis plus particulièrement parmi les chlorures.

Par ailleurs, on préfère employer les métaux alcalins, tels que le sodium, le potassium, notamment, pris seuls ou en mélange.

La concentration du sel tel que défini ci-dessus, dans la composition, varie dans de larges limites et est au plus égale à la concentration nécessaire pour obtenir un mélange saturé en sel.

A titre d'indication, et sans intention de se limiter, la quantité de sel varie entre 10 et 40 % en poids de la composition.

D'une façon générale, la concentration en sel précité est fonction de la teneur globale en fer et en aluminium dans la composition selon l'invention. Ainsi, plus cette teneur globale est élevée, plus la concentration en sel est faible.

Cependant, selon un mode de réalisation plus particulier de la présente invention, la concentration en sel dans la composition est comprise entre 1 et 5 mol/l.

Le mélange à traiter selon l'invention peut comprendre en outre des additifs comme notamment des agents antimousse ou encore des polyélectrolytes floculants. On rappelle que par polyélectrolyte, on entend des polymères organiques dont le poids moléculaire est habituellement supérieur à un ou plusieurs millions.

Tous les types de polyélectrolytes conviennent à la mise en oeuvre de l'invention. Ainsi, on peut utiliser des composés non ioniques ou cationiques.

A titre d'exemples de tels composés, et sans intention de s'y limiter, on peut citer les polyacrylamides, les polyoxydes d'éthylène, les polyvinylpyrrolidones et les alcools polyvinyliques, les polyamines neutres ou quaternaires, les polyaminoacrylates, les polyaminométhacrylates, les polyaminoacrylamides ou encore les polyaminométhacrylamides. De tels composés peuvent être utilisés seuls ou en mélange.

Le mélange à traiter selon l'invention comprend une teneur en polyélectrolyte floculant comprise entre 0 et 2 % en poids. De préférence, la teneur en polyélectrolyte est comprise entre 0 et 1 % en poids.

Un mode de préparation de la composition selon l'invention va maintenant être décrit. Celui-ci consiste à mettre en contact au moins un composé à base d'aluminium, choisi parmi les polychlorures ou polychlorosulfates basiques d'aluminium et au moins un composé à base de fer (II) et/ou de fer (III), le composé à base d'aluminium et/ou le composé à base de fer (II) et/ou de fer (III) étant préalablement mélangés avec au moins un sel choisi parmi les halogénures de métal alcalin et/ou alcalino-terreux.

Il est à noter que les composés à base d'aluminium et de fer peuvent être utilisés tels quels ou en solution, cette dernière possibilité étant préférée.

Dans un tel cas, le solvant choisi est plus particulièrement l'eau.

Ainsi, une première variante du procédé de préparation de la composition à traiter selon l'invention, consiste à préparer un mélange comprenant le composé à base d'aluminium tel que défini précédemment avec au moins un sel précité, puis à mettre en contact ledit mélange avec le composé à base de fer.

Une seconde variante consiste à procéder d'une façon totalement symétrique, au moins un sel précité étant mélangé au composé à base de fer, préalablement à la mise en contact des composés à base de fer et d'aluminium.

Enfin, une troisième variante consiste à préparer d'une part, un premier mélange comprenant au moins un composé à base d'aluminium et le sel précité, et d'autre part un second mélange comprenant au moins un composé à base de fer et le sel précité, puis à mettre en contact les deux mélanges ainsi obtenus.

Il est à noter que le sel (ou mélange de sels) employé dans le premier mélange peut être identique ou non à celui utilisé pour le second mélange.

De préférence, on prépare la composition en mettant en application cette troisième variante.

La mise en contact d'une part du composé à base de fer et d'autre part à base d'aluminium, ceux-ci étant combinés au sel selon l'une des variantes précédemment explicitées, peut être effectuée en introduisant le premier dans le second ou inversement. L'introduction simultanée des deux composés, peut aussi être envisagée.

Selon un mode particulier, on introduit le composé à base de fer dans celui à base d'aluminium.

Dans le cas où la composition à traiter selon l'invention comprend des additifs mentionnés auparavant, l'introduction desdits additifs peut avoir lieu avant la mise en contact des composés à base de fer et d'aluminium ou bien après que ceux-ci aient été mélangés.

Les quantités et concentrations des divers constituants sont ajustées de telle façon qu'elles correspondent à celles requises pour la composition selon l'invention.

La préparation d'une part des mélanges comprenant l'un ou l'autre des composés à base de fer ou d'aluminium, avec le sel précité, et d'autre part la mise en contact des mélanges ainsi préparés, est effectuée généralement sous agitation.

Habituellement, la durée d'agitation est comprise entre 5 et 60 minutes.

D'une façon classique, chacune des étapes du procédé de préparation de la composition selon l'invention, est réalisée à une température voisine de la température ambiante.

La présente invention concerne enfin un procédé de traitement de milieux aqueux mettant en oeuvre l'utilisation revendiquée.

Celui-ci est réalisé selon les méthodes classiquement mises en oeuvre dans ce domaine. Ainsi, les eaux sont mises en contact avec l'agent coagulant, en l'occurrence la composition selon l'invention, dans une quantité telle que l'eau après traitement présente les spécifications requises.

Le pH auquel l'opération est effectuée varie selon la qualité de l'eau à traiter et peut être avantageusement compris entre 5 et 10.

Généralement la température de traitement est voisine de la température ambiante.

On constate habituellement plusieurs phases dans le procédé de traitement des eaux, différenciées principalement par la vitesse d'agitation du milieu à traiter. Par exemple, et sans intention de se limiter, une première phase, sous forte agitation, est constituée par l'introduction de l'agent coagulant. Dans une seconde période, la vitesse d'agitation est diminuée de façon à permettre la coagulation. Enfin, une dernière phase consiste à laisser le mélange eau/coagulant au repos afin que les particules décantent. L'eau est ensuite surtirée puis subit éventuellement d'autres étapes de purification classiques comme notamment une nitrification-dénitrification biologique ou une étape d'oxydation chimique ou biochimique.

Des exemples concrets mais non limitatifs de l'invention vont maintenant être présentés.

### EXEMPLE 1

Cet exemple illustre la préparation de la composition à traiter selon l'invention.

### mélange 1 :

* 50 g de polychlorure d'aluminium avec un teneur en Al₂O₃ de 11 % et une basicité de 76,7 %.
   Le produit correspond à la formule suivante :

   - [Al(OH)_{2,3}Cl_{0,7}][H₂O]_{20,7}
* 5,55 g de NaCl
Ces produits sont mélangés à température ambiante et l'on obtient une solution aqueuse limpide.

### mélange 2 :

* 50 g d'une solution de chlorure ferrique à 41 % FeCl₃ dans l'eau
* 6,45 g de NaCl

La composition à traiter selon l'invention est ensuite obtenue par introduction sous agitation du mélange 2 dans le mélange 1.
La composition est stable après un stockage de 12 mois.

### EXEMPLE 2

On répète l'exemple **1** excepté le fait que l'on introduit dans la composition 5 ‰ d'un polyélectrolyte (polymère cationique FL1840).

On met donc en contact les mélanges 1 et 2 décrits dans l'exemple précédent, puis on introduit le polyélectrolyte une fois que les mélanges 1 et 2 ont donné une solution homogène et limpide.

On obtient une solution aqueuse limpide et l'on ne constate l'apparition d'aucun précipité même après un stockage de 12 mois.

### EXEMPLE 3

Cet exemple illustre une application de la composition obtenue dans l'exemple 1

Les tests de floculation sont réalisés dans un bêcher d'un litre muni d'un agitateur, d'un moteur tournant à vitesse constante durant chaque phase de mélange, d'une horloge et d'un système permettant de régler la vitesse et la durée de l'agitation.
La procédure mise en oeuvre pour faire les essais est la suivante :
1. Phase d'agitation rapide (vitesse d'agitation de 350 tr/mn) de 60 secondes, pendant laquelle la composition est introduite. La quantité injectée dans le milieu à traiter est contrôlée au moyen d'une micro pipette.
2. Phase d'agitation lente (vitesse de 30 tr/mn) pendant 10 minutes, durant laquelle a lieu la floculation.
3. Phase de repos (sans agitation) de 10 minutes pendant laquelle a lieu la décantation des matières en suspension.

Les échantillons sont prélevés après la dernière étape.

Les Matières En Suspension (MES) sont analysés selon la norme NF T90-105.

La Demande Chimique en Oxygène (DCO) est analysée à l'aide d'un appareil (DR 2000) commercialisé par la société HACH. La méthode utilisée, recommandée par ladite société, fait appel à une mesure d'absorption UV-visible, après un traitement d'oxydation du mélange à analyser.

Les résultats sont rassemblés dans le tableau ci-dessous :

| | COAGULANT | | EAU DECANTEE | | |
|---|---|---|---|---|---|
| | NATURE | DOSE | pH | D.C.O. | M.E.S. |
| eau brute | - | - | 9,05 | 712 | 183 |
| eau traitée | exemple 1 | 23 | 8,96 | 516 | 48 |
| eau traitée | " | 61 | 8,85 | 486 | 36 |
| eau traitée | " | 122 | 8,73 | 44 | 24 |

Les doses sont exprimées en µl de coagulant/litre d'eau à traiter.

## Revendications

1. Utilisation comme agent stabilisant, dans un mélange d'au moins un polychlorure basique d'aluminium et d'au moins un composé à base de fer (II) et/ou de fer (III), ledit mélange présentant un rapport Al/Fe compris entre 1 et 50 % (exprimé en poids de métal), d'au moins un sel choisi parmi les halogénures de métal alcalin et/ou alcalino-terreux.

2. Utilisation selon la revendication précédente, **caractérisée en ce que** le mélange est sous forme d'une solution, le solvant étant de préférence l'eau.

3. Utilisation selon la revendication précédente, **caractérisée en ce que** le mélange comprend au moins un polychlorure d'aluminium basique dont la formule générale est la suivante :
- [Alₙ(OH)ₘCl₃ₙ₋ₘ][H₂O]_{z}
formule dans laquelle :
n, m sont des nombres positifs,
3n-m est positif,
z est un entier positif au moins égal à 1.

4. Utilisation selon la revendication précédente, **caractérisée en ce que** le mélange comprend au moins un polychlorure d'aluminium basique présentant un rapport (m/3n)x100 compris entre 10 et 80 %, de préférence entre 20 et 80 %.

5. Utilisation selon l'une des revendication précédentes, **caractérisée en ce que** le mélange comprend au moins un polychlorure d'aluminium basique présentant une teneur en aluminium, exprimée en Al₂O₃ inférieure à 22 %, plus particulièrement comprise entre 5 et 22 %, et de préférence comprise entre 10 et 22 %.

6. Utilisation selon l'une des revendications précédentes, **caractérisée en ce que** le mélange comprend au moins un composé à base de fer (Il) et/ou de fer (III) choisi parmi les chlorures, les sulfates de fer (II) et/ou de fer (III) ou les chlorosulfates de fer (III).

7. Utilisation selon la revendication précédente, **caractérisée en ce que** le mélange comprend du chlorure de fer (III) en tant que composé à base de fer.

8. Utilisation selon l'une des revendications précédentes, **caractérisée en ce que** le mélange présente un rapport Al/Fe compris 10 et 30 % en poids, et de préférence compris entre 10 et 20 % en poids.

9. Utilisation selon l'une des revendications précédentes, **caractérisée en ce que** l'agent stabilisant est choisi parmi les chlorures de métal alcalin et/ou alcalino-terreux.

10. Utilisation selon l'une des revendications précédentes, **caractérisée en ce que** le mélange comprend en outre un polyélectrolyte floculant.

## Claims

1. Use as a stabilising agent in a mixture of at least one basic aluminium polychloride and at least one compound based on iron (II) and/or iron (III), said mixture having an Al/Fe ratio of between 1 and 50% (expressed by weight of metal), of at least one salt selected from alkali metal and/or alkaline earth metal halides.

2. Use according to the preceding claim **characterised in that** the mixture is in the form of a solution, the solvent preferably being water.

3. Use according to the preceding claim **characterised in that** the mixture comprises at least one basic aluminium polychloride of which the general formula is as follows:
[Alₙ(OH)ₘCl₃ₙ₋ₘ][H₂O]_{z}
in which formula:
n, m are positive numbers,
3n-m is positive, and
z is a positive integer which is at least equal to 1.

4. Use according to the preceding claim **characterised in that** the mixture comprises at least one basic aluminium polychloride having a ratio (m/3n)x100 of between 10 and 80%, preferably between 20 and 80%.

5. Use according to one of the preceding claims **characterised in that** the mixture comprises at least one basic aluminium polychloride having an aluminium content expressed as Al₂O₃ of less than 22%, more particularly between 5 and 22% and preferably between 10 and 22%.

6. Use according to one of the preceding claims **characterised in that** the mixture comprises at least one compound based on iron (II) and/or iron (III) selected from chlorides and sulphates of iron (II) and/or iron (III) and chlorosulphates of iron (III).

7. Use according to the preceding claim **characterised in that** the mixture comprises iron (III) chloride as the iron-based compound.

8. Use according to one of the preceding claims **characterised in that** the mixture has an Al/Fe ratio of between 10 and 30% by weight and preferably between 10 and 20% by weight.

9. Use according to one of the preceding claims **characterised in that** the stabilising agent is selected from alkali metal and/or alkaline earth metal chlorides.

10. Use according to one of the preceding claims **characterised in that** the mixture further comprises a flocculating polyelectrolyte.

## Patentansprüche

1. Verwendung von mindestens einem Salz, ausgewählt unter den Halogeniden von Alkalimetall und/oder Erdalkalimetall, als Stabilisierungsmittel in einer Mischung von mindestens einem basischen Aluminiumpolychlorid und mindestens einer Verbindung auf der Basis von Eisen(II) und/oder Eisen(III), wobei die genannte Mischung ein Verhältnis Al/Fe zwischen 1 % und 50 % (ausgedrückt in Metallgewicht) aufweist.

2. Verwendung nach dem vorstehenden Anspruch, **dadurch gekennzeichnet, daß** die Mischung in Form einer Lösung vorliegt, wobei das Lösungsmittel vorzugsweise Wasser ist.

3. Verwendung nach dem vorstehenden Anspruch, **dadurch gekennzeichnet, daß** die Mischung mindestens ein basisches Aluminiumpolychlorid umfaßt, dessen allgemeine Formel die folgende ist:
[Alₙ(OH)ₘCl₃ₙ₋ₘ][H₂O]_{z}
worin
n, m positive Zahlen sind,
3n-m positiv ist,
z eine ganze positive Zahl von mindestens gleich 1 ist.

4. Verwendung nach dem vorstehenden Anspruch, **dadurch gekennzeichnet, daß** die Mischung mindestens ein basisches Aluminiumpolychlorid umfaßt, das ein Verhältnis (m/3n)x100 zwischen 10 % und 80 %, vorzugsweise zwischen 20 % und 80 % aufweist.

5. Verwendung nach einem der vorstehenden Ansprüche, **dadurch gekennzeichnet, daß** die Mischung mindestens ein basisches Aluminiumpolychlorid umfaßt, das einen Gehalt an Aluminium, ausgedrückt in Al₂O₃, von unter 22 %, insbesondere zwischen 5 % und 22 % und vorzugsweise zwischen 10 % und 22 % aufweist.

6. Verwendung nach einem der vorstehenden Ansprüche, **dadurch gekennzeichnet, daß** die Mischung mindestens eine Verbindung auf der Basis von Eisen(II) und/oder Eisen(III) umfaßt, ausgewählt unter den Chloriden, den Sulfaten von Eisen(II) und/oder Eisen(III) oder den Chlorsulfaten von Eisen(III).

7. Verwendung nach dem vorstehenden Anspruch, **dadurch gekennzeichnet, daß** die Mischung Eisen(III)-chlorid als Verbindung auf der Basis von Eisen umfaßt.

8. Verwendung nach einem der vorstehenden Ansprüche, **dadurch gekennzeichnet, daß** die Mischung ein Verhältnis Al/Fe zwischen 10 Gew.-% und 30 Gew.-% und vorzugsweise zwischen 10 Gew.-% und 20 Gew.-% aufweist.

9. Verwendung nach einem der vorstehenden Ansprüche, **dadurch gekennzeichnet, daß** das Stabilisierungsmittel unter den Chloriden von Alkalimetall und/oder Erdalkalimetall ausgewählt wird.

10. Verwendung nach einem der vorstehenden Ansprüche, **dadurch gekennzeichnet, daß** die Mischung außerdem ein Polyelektrolyt-Flockungsmittel umfaßt.
